# EUROPEAN PATENT SPECIFICATION

(11) **EP 1 507 307 B1**
(45) Date of publication and mention of the grant of the patent: **05.03.2008**
(21) Application number: 03725689.8
(22) Date of filing: 28.04.2003
(51) Int. Cl.: H01G 9/20

(54) **PHOTOELECTRIC CONVERSION DEVICE**
PHOTOELEKTRISCHE ZELLE
DISPOSITIF DE CONVERSION PHOTOELECTRIQUE

(30) Priority: 20.05.2002 JP 2002145358
(43) Date of publication of application: 16.02.2005
(60) Divisional application: 07107824.0
(73) Proprietor: MATSUSHITA ELECTRIC WORKS, LTD., Kadoma-shi, Osaka 571-8686 (JP); Ecole Polytechnique Fédérale de Lausanne (EPFL), 1015 Lausanne (CH)
(72) Inventor: SEKIGUCHI, Takashi, Suita-shi, Osaka 565-0802 (JP); GRAETZEL, Michael, CH-1015 Lausanne (CH); ZAKEERUDDIN, Shaik Mohammad, CH-1015 Lausanne (CH); YOROZU, Takehiko, Toride-shi, Ibaraki 302-0034 (JP); MIYATA, Teruhisa, Takatsuki-shi, Osaka 569-1121 (JP); WANG, Peng, 1015 Lausanne (CH)
(74) Representative: Ganguillet, Cyril
(86) International application number: PCT/JP2003/005426
(87) International publication number: WO 2003/098731

(56) References cited:
- EP-A- 0 986 079
- EP-A- 1 180 774
- EP-A1- 0 718 288
- WO-A1-95/18456
- JP-A- 2000 058 140
- JP-A- 2000 058 891
- JP-A- 2000 090 991
- JP-A- 2000 277 182
- JP-A- 2003 068 374
- JP-A- 2003 100 362
- PAPAGEORGIOU N. ET AL.: 'The performance and stability of ambient temperature molten salts for solar cell applications' JOURNAL OF THE ELECTROCHEMICAL SOCIETY vol. 143, no. 10, October 1996, pages 3099 - 3108, XP002118482
- G. BOSVHLOO, H. LINDSTRÖM, E. MAGNUSSON, A. HOLMBERG, A. HAGFELDT: "Optimization of dye sensitized solar cells prepared by compression method" J. PHOTOCHEM. PHOTOBIOL. A: CHEM., vol. 148, 18 March 2002 (2002-03-18), pages 11-15, XP008043909
- K. KAWATA, S. M. ZAKEERUDDIN, M. GRÄTZEL: "Solvent Free Dye-Sensitized Nanocrystalline Solar Cell Using Room-Temperature Molten Salt Electrolyte" ELECTROCHEMICAL SOCIETY PROCEEDINGS, vol. 2002-19, 12 May 2002 (2002-05-12), - 17 May 2002 (2002-05-17) pages 16-30, XP008029687
- N.PAPAGEORGIOU ET AL.: "The Performance and Stability of Ambient Temperature Molten Salts for SOlar Cell Applications" J. ELECTROCHEM. SOC., vol. 143, no. 10, 1996, pages 3099-3108, XP002118482
- A. HINSCH ET AL.: "Long-term Stability of Dye-Sensitized Solar Cells" PROG. PHOTOVOLT: RES. APPL., vol. 9, pages 425-438,

## Description

### Technical Field

The present invention relates to a photoelectric transducer. More specifically, the present invention relates to a photoelectric transducer capable of maintaining an excellent conversion efficiency for a long period of time.

### Background Art

Solar batteries are anticipated as remarkably clean energy sources, and pn-junction type solar batteries have already been put to practical use. On the other hand, photochemical batteries that obtain electric energy by using a chemical reaction in a photoexcitation state have been developed by a number of researchers. As far as practical use is concerned, the photochemical batteries fall behind the pn-junction type solar batteries that have achieved satisfactory results.

Among conventional photochemical batteries, dye-sensitized wet solar batteries, composed of a sensitizer and an electron receptor, using an oxidation-reduction reaction are known. For example, there is a battery composed of a combination of a thionine dye and an iron (II) ion. Furthermore, after the Honda-Fujishima Effect had been found, photochemical batteries using photocharge separation of metal and an oxide thereof also are known.

Hereinafter, the operation principal of a photochemical battery will be described. In the case where a semiconductor comes into contact with metal, a Schottky junction is formed due to the relationship between the metal and the work function of the semiconductor. When a semiconductor is in contact with a solution, a similar junction is formed. For example, when an oxidation-reduction system such as Fe²⁺/Fe³⁺, Fe(CN)₆⁴⁻/Fe(CN)₆³⁻, I-/I₂, Br-/Br₂, and hydroquinone/quinone is contained in a solution, if an n-type semiconductor is soaked in this solution, electrons in the vicinity of a surface of the semiconductor move to an oxidizer in the solution to reach an equivalent state. As a result, the vicinity of the surface of the semiconductor is charged positively to form a potential gradient. Along with this, a potential gradient also is formed in a conduction band and a valence band of the semiconductor.

When the surface of a semiconductor electrode soaked in the oxidation-reduction solution is irradiated with light in the above-mentioned state, light having energy equal to or more than a bandgap of the semiconductor is absorbed to generate electrons in the conduction band and holes in the valence band in the vicinity of the surface. The electrons excited to the conduction band are transmitted to the inside of the semiconductor due to the above-mentioned potential gradient present in the vicinity of the surface of the semiconductor. On the other hand, the holes generated in the valence band take electrons from a reductant in the oxidation-reduction solution.

When a metal electrode is soaked in the oxidation-reduction solution to form a circuit between the metal electrode and the semiconductor electrode, the reductant with electrons taken away by the holes diffuse in the solution and receive electrons from the metal electrode to be reduced again. While this cycle is repeated, the semiconductor electrode functions as a negative electrode, and the metal electrode functions as a positive electrode, whereby an electric power can be supplied to the outside. Thus, the photovoltaic effect corresponds to the difference between the oxidation-reduction level of the oxidation-reduction solution and the Fermi level in the semiconductor. The principle of the photochemical battery is as described above.

In order to increase the photovoltaic effect in such a photochemical battery, (1) an oxidation-reduction solution having a low oxidation-reduction level (i.e., strong oxidation power) is used, and (2) a semiconductor capable of forming a large difference between the oxidation-reduction level and the Fermi level in the semiconductor (semiconductor with a large bandgap) is used.

However, when the oxidation force of the oxidation-reduction solution is too large, an oxide film is formed on the surface of the semiconductor, and a light current stops within a short period of time. Furthermore, regarding a bandgap, generally, a semiconductor having a bandgap of 3.0 eV or less (furthermore, 2.0 eV or less) is likely to be dissolved in a solution due to a current flowing during photoelectric conversion. For example, n-Si forms an inactive oxide coating on the surface of the semiconductor in the water by irradiation with light, and n-GaAs and n-CdS are dissolved in an oxidation manner.

In order to solve the above-mentioned problems, an attempt has been made to coat a semiconductor with a protective film, and the use of a p-type conductive polymer having a hole transportation property, such as polypyrrole, polyaniline, and polythiophene, for a protective film of a semiconductor has been proposed. However, such a polymer has a problem in durability, and can be used stably for at most several days.

Furthermore, in order to solve the problem of photodissolution, using a semiconductor having a bandgap of 3 eV or more is considered. However, this bandgap is too large to efficiently absorb sunlight having a peak intensity in the vicinity of 2.5 eV. Therefore, such a semiconductor can only absorb an ultraviolet portion of sunlight, and cannot absorb a visible light region occupying the greatest part of sunlight. As a result, a photoelectric conversion efficiency is very low.

In order to satisfy both the effective use of a visible light region and the light stability of a semiconductor having a large bandgap, a dye-sensitized solar battery is known, in which a sensitizing dye that absorbs visible light on a long wavelength side smaller than the bandgap of a semiconductor are supported on the semiconductor. The dye sensitization solar battery is different from a conventional wet solar battery using a semiconductor in that electrons are excited by irradiating a dye with light, and a photocharge separation process for the excited electrons to move from the dye to the semiconductor is used as a photoelectric conversion process.

The dye sensitization solar battery is often associated with photosynthesis. Originally, chlorophyll has been considered as a dye in the same way as in photosynthesis. However, unlike natural chlorophyll that is always exchanged for new chlorophyll, a dye used in a solar battery has a problem in stability. Furthermore, the photoelectric conversion efficiency for the solar battery does not reach 0.5%. Therefore, it is very difficult to directly imitate the process of photosynthesis in the natural world to constitute a solar battery.

As described above, the dye sensitization solar battery attempts to absorb visible light with a long wavelength using the concept of photosynthesis. Actually, the conduction mechanism of electrons becomes complicated, which in turn results in a problem of an increased loss of light energy. In a solid solar battery, an absorption efficiency can be enhanced, if a layer absorbing light is made thick. However, regarding the dye sensitization solar battery, only a single molecular layer of a dye on a surface can inject electrons into a semiconductor electrode, and the absorption efficiency cannot be enhanced by increasing the thickness of a light absorbing layer. Therefore, in order to eliminate unnecessary absorption of light, it is desirable that the dye on the semiconductor surface is formed of a single molecular layer, and the area of the single molecular layer is enlarged.

Furthermore, in order for the excited electrons in the dye to be injected into a semiconductor efficiently, it is preferable that the dye is chemically bonded to the surface of the semiconductor. For example, regarding a semiconductor using titanium oxide, it is important that a carboxyl group is present on the dye so as to be chemically bonded to the surface of the semiconductor.

In this respect, important improvement has been achieved by a group of Fujihira et al. They have reported in "Nature" in 1977 that a carboxyl group of rhodamine B is bonded to a hydroxyl group on the surface of SnO₂ by ester bonding, whereby a light current becomes 10 times or more of that in a conventional adsorption method. The reason for this is as follows: a π-orbit on which electrons having absorbed light energy in the dye are present is closer to the surface of a semiconductor in the case of ester bonding, compared with conventional amide bonding.

However, even if electrons can be injected into the semiconductor effectively, the electrons in the conduction band may be bonded again to a ground level of the dye or may be bonded again to an oxidation-reduction material. Because of these problems, a photoelectric conversion efficiency remains low irrespective of the above-mentioned improvement in electron injection.

As described above, a serious problem of the conventional dye sensitization solar battery lies in that only a sensitizing dye supported on the surface of a semiconductor by a single layer can inject electrons into the semiconductor. More specifically, a single crystalline or polycrystalline semiconductor that has been often used in semiconductor electrodes have a smooth surface and does not have pores inside, and the effective area in which a sensitizing dye is supported is equal to an electrode area, so that the supported amount of the sensitizing dye is small.

Thus, in the case of using such an electrode, a sensitizing dye in a single molecular layer supported on the electrode can absorb only 1% or less of incident light even at a maximum absorption wavelength, so that the use efficiency of light is very low. An attempt to form a sensitizing dye as a multi-layer so as to enhance light collecting force also has been proposed. However, a sufficient effect cannot be obtained.

Under such a circumstance, in order to solve the above-mentioned problems, Graetzel et al. have proposed a method for making a titanium oxide electrode porous so as to allow it to support a sensitizing dye, and increasing an internal area remarkably, as described in JP 01(1989)-220380 A. In this method, a titanium oxide porous film is produced by a sol-gel process. The porosity of the film is about 50%, and a nano-porous structure having a very large internal surface area is formed. For example, at the thickness of 8 µm, a roughness factor (ratio of an actual area of the porous internal portion with respect to the substrate area) reaches about 720. When this surface is calculated geometrically, the supported amount of the sensitizing dye reaches 1.2 × 10⁻⁷ mol/cm². About 98% of incident light is absorbed at a maximum absorption wavelength.

The novel dye sensitization solar battery that also is called a Graetzel cell is characterized in that the supported amount of a sensitizing dye is increased remarkably due to the above-mentioned porous configuration of titanium oxide, sunlight is absorbed efficiently, and an electron injection speed into a semiconductor is very high.

Graetzel et al. have developed a bis(bipyridyl)Ru(II) complex as a sensitizing dye for a dye sensitization solar battery. The Ru complex has a configuration represented by a general formula: cis-X₂bis(2,2'-bipyridyl-4,4'-dicarboxylate)Ru(II). X represents Cl-, CN-, or SCN-. A systematic study has been conducted for fluorescence, visible light absorption, electrochemical and light oxidation-reduction behavior, with respect to the cases of Cl-, CN-, and SCN-. Among them, cis-(diisocyanate)-bis(2,2'-bipyridyl-4,4'-dicarboxylate)Ru(II) was shown to have remarkably excellent performance as a sunlight absorber and a dye sensitizer.

The visible light absorption of the dye sensitizer is ascribed to the charge movement transition from metal to a ligand. Furthermore, carboxyl groups of the ligand are directly coordinated on Ti ions on the surface to form a close electronic contact between the dye sensitizer and titanium oxide. Because of the electronic contact, electrons are injected from the dye sensitizer to the conduction band of titanium oxide at a very high speed of 1 pico second or less, and recapture of electrons injected into the conduction band of titanium oxide by the oxidized dye sensitizer occurs for the order of micro seconds. This speed difference causes the directivity of optically excited electrons, and charge separation is performed at a very high efficiency. This is a difference from the pn-junction type solar battery that performs charge separation by a potential gradient on a pn-junction surface, which is an essential feature of the Graetzel cell.

Next, the configuration of the Graetzel cell will be described. The Graetzel cell is a sandwich-type cell in which an electrolyte solution containing an oxidation-reduction pair is sealed between conductive glass substrates coated with a transparent conductive film of fluorine-doped tin oxide. One of the glass substrates is obtained by stacking a porous film composed of ultrafine particles of titanium oxide on a transparent conductive film, and allowing the porous film to adsorb a sensitizing dye to form a working electrode. The other glass substrate is obtained by coating a transparent conductive film with a small amount of platinum to obtain a counter electrode. Spacers are interposed between two glass substrates, and an electrolyte solution is injected into a small gap therebetween using a capillary phenomenon. The electrolyte solution uses a mixed solvent of ethylene carbonate and acetonitrile, and tetra iodide-n-propyl ammonium and iodine as solutes, and contains an oxidation-reduction pair of I⁻/I₃⁻. Platinum applied to the counter electrode has a catalytic function of performing cathodic reduction of I₃⁻ to I⁻ of the oxidation-reduction pair.

The operation principle of the Graetzel cell basically is the same as that of the conventional wet solar battery using a semiconductor. The reason why a photocharge separation response is performed uniformly and efficiently in any portion of a porous electrode such as the Graetzel cell is that an electrolyte layer mainly is made of a liquid. More specifically, only by soaking a dye-supporting porous electrode in a solution, the solution diffuses uniformly in the porous material, and an ideal electric chemical interface can be formed.

However, it is not preferable that the electrolyte layer is a liquid layer, in terms of the stability of a solar battery. Actually, in most cases, even when a battery is produced, the electrolyte solution leaks before the degradation of other battery components, which decreases the performance of the solar battery. Therefore, in order to put the Graetzel cell to practical use, each component constituting the Graetzel cell should be studied in detail, as exemplified in an electrolyte.

EP 986079 A2 discloses photoelectric transducers comprising a semiconductor electrode provided with a semiconductor layer supporting a sensitizing dye; a counter electrode opposed to the semiconductor electrode; and an electrolyte layer interposed between the semiconductor electrode and the counter electrode, wherein the eletrolyte layer includes a compound containing a nitrogen atom having non-shared electron pairs in a molecule, a room temperature molten salt and a nitrile solvent having a boiling point of 200°C or higher and wherein said electrolyte layer comprises iodine added at a concentration of 0.01 mol/dm³ to 0.2 mol/dm³ and triiodide (I₃⁻), said triiodide being provided by said added iodine and by added iodide salt of a quaternary ammonium derivative or of an imidazolium derivative. On page 7, EP 986079 A2 discloses 1,2-dimethyl-benzimidazole.

### Disclosure of the Invention

The present invention provides a photoelectric transducer including: a semiconductor electrode provided with a semiconductor layer supporting a sensitizing dye; a counter electrode opposed to the semiconductor electrode; and an electrolyte layer interposed between the semiconductor electrode and the counter electrode,
wherein the electrolyte layer includes a compound of formula (I): 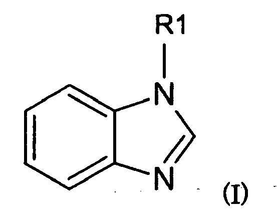 wherein R1 is a linear or branched alkyl, which has 1 to 20 carbon atoms and which may comprise another element that substitutes for a part or an entire of hydrogen;
wherein said electrolyte layer comprises one selected from a room temperature molten salt and a nitrile solvent having a boiling point of 100°C or higher; and,
wherein said electrolyte layer comprises iodine added at a concentration of 0.06 mol/dm³ to 6 mo/dm³, and triiodide (I₃⁻), said triiodide being provided by said added iodine and by added iodide salt of a quaternary ammonium compound.

The present invention further provides a method of manufacturing a stable photoelectric transducer, wherein stable means that, after exposure to 80°C for 1000 hours, said transducer maintains at least 90% of its initial power conversion efficiency, said method comprising the steps of:
- providing a semiconductor electrode provided with a semiconductor layer supporting a sensitizing dye;
- providing a counter electrode opposed to the semiconductor electrode; and,
- providing an electrolyte layer interposed between the semiconductor electrode and the counter electrode, wherein said electrolyte layer includes a compound of formula (I): 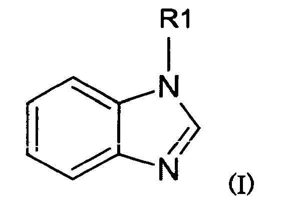
wherein R1 is defined as above;
wherein said electrolyte layer comprises one selected from a room temperature molten salt and a nitrile solvent having a boiling point of 100°C or higher; and,
wherein said electrolyte layer comprises iodine added at a concentration of 0.06 mol/dm³ to 6 mol/dm³, and triiodide (I₃⁻), said triiodide being provided by said added iodine and by added iodide salt of a quaternary ammonium compound.

### Brief Description of Drawings

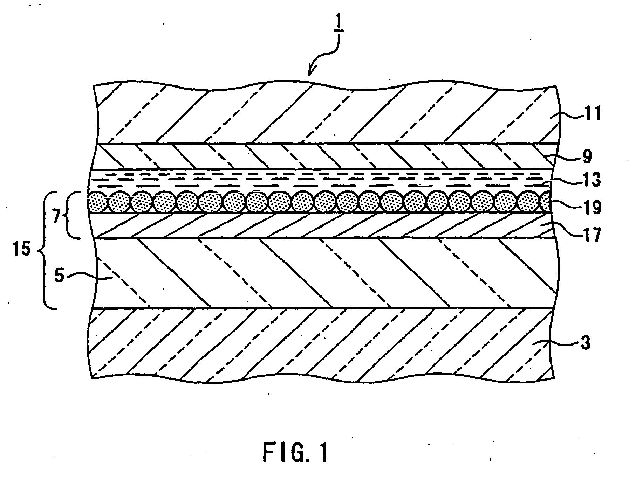

FIG. 1 is a schematic cross-sectional view showing an example of a photoelectric transducer of the present invention.

### Best Mode for Carrying Out the Invention

The inventors of the present invention have studied earnestly so as to provide a photoelectric transducer capable of maintaining an excellent conversion efficiency for a long period of time. As a result, we found it effective that a compound containing a nitrogen atom having non-shared electron pairs in a molecule is present in an electrolyte layer. The following is inferred: due to the presence of the above-mentioned compound in the electrolyte layer, the surface of a semiconductor that does not adsorb a dye adsorbs the compound; this suppresses a reverse electron reaction occurring on the surface of the semiconductor layer, and a stabilization effect of a conversion efficiency can be obtained. Alternatively, the following is inferred: due to the presence of the compound in an electrolyte layer, an effect of enhancing the Fermi level of the semiconductor layer and an effect of suppressing the pH fluctuation of the electrolyte layer are obtained, which contributes to the stabilization of a conversion efficiency.

The concentration of the compound containing a nitrogen atom having non-shared electron pairs in a molecule preferably is 5 × 10⁻⁴ mol/dm³ to 2 mol/dm³ in the electrolyte layer. By setting the concentration of the compound to be 5 × 10⁻⁴ mol/dm³ or more, an effect to be obtained becomes large. By setting the concentration of the compound to be 2 mol/dm³ or less, the compound is suppressed from being deposited in a cell, which can prevent a decrease in a conversion efficiency.

According to the present invention, as the compound containing a nitrogen atom having non-shared electron pairs in a molecule, those which are represented by, for example, the following Chemical Formula 1 (where R1 is an alkyl group, which includes 1 to 20 carbon atoms and which may be linear or branched, and another element may substitute for a part or an entire of hydrogen).

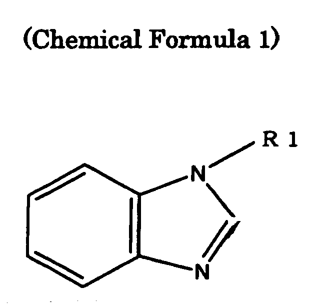

An example of the compound represented by Chemical Formula 1 is N-methylbenzoimidazole.

Regarding the concentration of iodine, we found that the concentration of I₃ in the electrolyte layer tends to decrease with a passage of time. The reason for this is assumed as follows: compared with the generation reaction of I₃⁻ by holes generated in a semiconductor layer, the consumption reaction of I₃- by electrons is more active. When the concentration of I₃⁻ becomes too low, the diffusion of redox in the electrolyte layer becomes rate-determining to decrease a conversion efficiency. Therefore, for a use requiring a higher conversion efficiency, it is required to previously increase the concentration of I₃⁻ to a predetermined value or more. The concentration of I₃⁻ in the electrolyte is determined by the concentration of iodine (I₂) at a time of preparation. Thus, by setting the concentration of I₂ at a time of preparation to a high level, the concentration of I₃⁻ can be enhanced to prevent a decrease in a conversion efficiency involved in a decrease in the concentration of I₃⁻. In terms of stability of a conversion efficiency, it is required that the concentration of iodine in the electrolyte layer is set to be 0.06 mol/dm³ to 6 mol/dm³. In the case where the concentration of I₂ at a time of preparation is less than 0.06 mol/dm³, there is an influence involved in a decrease in the concentration of I₃⁻. Therefore, compared with the case of setting the concentration higher than this, a conversion efficiency becomes lower. On the other hand, in the case where the concentration of I₂ at a time of preparation is set too high, the light absorption in the electrolyte layer not only becomes a factor of decreasing a conversion efficiency, but also makes it difficult to obtain a stabilization effect of a conversion efficiency. Therefore, it is desired that the concentration of I₂ at a time of preparation is set to be 6 mol/dm³ or less.

For a use that does not require so high conversion efficiency, an electrolyte including iodine with a concentration outside of the above-mentioned range may be used. For example, in the case where the electrolyte layer has a matrix of a polymer compound for holding redox, the electrolyte becomes a gel or a solid. This alleviates the problem in leakage of liquid of an electrolyte solution, resulting in an increase in application of a device. Thus, it is not necessary to limit the concentration of iodine.

Since I₃⁻ has maximum absorption at 360 nm, the quantification I₃⁻ in the electrolyte can be performed using this feature by spectrophotometry.

Furthermore, as the solvent constituting the electrolyte layer, any of an aqueous solvent and an organic solvent can be used. In order to keep a dye on the surface of a semiconductor layer and an oxidation-reduction type constituent in a more stable state, an organic solvent is preferable. Examples of the organic solvent include carbonate compounds such as dimethyl carbonate, diethyl carbonate, methyl ethyl carbonate, ethylene carbonate, and propylene carbonate; ester compounds such as methyl acetate, methyl propionate, and γ-butyrolactone; ether compounds such as diethyl ether, 1,2-dimethoxyethane, 1,3-dioxosilane, tetrahydrofuran, and 2-methyl-tetrahydrofuran; heterocyclic compounds such as 3-methyl-2-oxazolidinone, 2-methylpyrolidone, and 1,3-dimethyl-2-imidazolidinone; nitrile compounds such as acetonitrile, methoxyacetnitrile, and propionitrile; sulforane; N,N,N',N'-tetramethyl urea; didimethylsulfoxide; dimethylformamide; formamide; N-methylformamide; N-methylacetamide; N-methylpropioneamide; and the like. These solvents can be used alone or in combination of at least two kinds thereof.

Among them, as the solvent used for the electrolyte layer, it is preferable that a nitrile solvent having a boiling point of 100°C or higher constitutes the electrolyte layer. In the case of using a solvent having a boiling point lower than 100°C, when a photoelectric transducer is stored in a high-temperature environment, sealing is likely to be broken due to an increase in an internal pressure, which causes a conversion efficiency to be decreased remarkably. In contrast, in the case of constituting the electrolyte layer with a solvent having a boiling point of 100°C or higher, sealing is unlikely to be broken, whereby a photoelectric transducer excellent in long-term stability can be provided. Furthermore, the nitrile solvent has characteristics of being capable of constituting an electrolyte layer having low viscosity and excellent ion conductivity.

Examples of the nitrile solvent having a boiling point of 100° C or higher include 3-methoxypropionitrile, succinonitrile, butylonitrile, isobutylonitrile, valeronitrile, benzonitrile, α-tolunitrile, and the like. In particular, 3-methoxypropionitrile enables a high conversion efficiency to be obtained, and allows a photoelectric transducer excellent in long-term stability to be provided.

Furthermore, as the solvent constituting the electrolyte layer, room temperature molten salt and the like also can be used preferably. Examples of the room temperature molten salt include an imidazolium salt described in JP 9(1997)-507334A. Among them, 1-methyl-3-propylimidazolium iodide is a preferable solvent for obtaining a high conversion efficiency due to its low viscosity. It should be noted that room temperature refers to about 15°C to 25°C.

Furthermore, as the solvent constituting the electrolyte layer, a mixture of a room temperature molten salt and an organic solvent may be used.

Next, the embodiment of the present invention will be described with reference to the drawings.

FIG. 1 is a schematic cross-sectional view showing an example of a photoelectric transducer of the present invention. As shown in the figure, a photoelectric transducer 1 of the present invention has a semiconductor electrode 15 having the following configuration. More specifically, the semiconductor electrode 15 is composed of a transparent electrode 5 formed on the surface of a substrate 3 and a semiconductor layer 7 formed on the surface opposite to the substrate 3 of the transparent electrode 5. Herein, the semiconductor layer 7 is composed of a semiconductor thin film 17 supporting a sensitizing dye 19 on its surface.

A counter electrode 9 is present so as to be opposed to the semiconductor layer 7 of the semiconductor electrode 15. The counter electrode 9 is formed on the surface of another substrate 11. An electrolyte layer 13 is interposed between the semiconductor layer 7 and the counter electrode 9.

In the photoelectric transducer of the present invention, since the semiconductor layer 7 constituting the photoelectric transducer 1 is composed of the porous semiconductor thin film 17. Therefore, the roughness factor of the semiconductor layer 7 is so large as to support a great amount of the sensitizing dye 19.

As the substrates 3 and 11, glass, plastic, or the like can be used. Plastic is flexible, so that it is suitable for use requiring flexibility. The substrate 3 functions as a light incident side substrate. Therefore, the substrate 3 preferably is transparent. On the other hand, the substrate 11 may be transparent or opaque. However, the substrate 11 preferably is transparent so as to allow light to be incident thereupon through both sides.

The thickness of the semiconductor layer 7 supporting the sensitizing dye preferably is in a range of 0.1 µm to 100 µm, In the case where the thickness of the semiconductor layer 7 is less than 0.1 µm, there is possibility that a sufficient photoelectric conversion effect cannot be obtained. On the other hand, in the case where the thickness exceeds 100 µm, there is inconvenience that the transparency with respect to visible light and infrared light is degraded dramatically, which is not preferable. The thickness of the semiconductor layer 7 is more preferably in a range of 1 µm to 50 µm, particularly preferably in a range of 5 µm to 30 µm, and most preferably in a range of 10 µm to 20 µm.

In the case where the semiconductor thin film 17 is composed of semiconductor particles, it is preferable that the diameter of the semiconductor particles generally is in a range of 5 nm to 1 µm. In the case where the diameter of the semiconductor particles is less than 5 nm, a hole diameter of the semiconductor layer 7 becomes smaller than 5 nm, which makes it difficult for an oxidation-reduction material in an electrolytic solution to move; as a result, a light current to be obtained is likely to decrease. Furthermore, when the diameter of the semiconductor particles exceeds 1 µm, the surface area of the semiconductor layer 7 is not sufficiently large, so that the supported amount of a sensitizing dye is decreased, and a sufficient light current may not be obtained. A particularly preferable range of the diameter of the semiconductor particles is 10 nm to 100 nm.

Preferable examples of the semiconductor material include oxides of Cd, Zn, In, Pb, Mo, W, Sb, Bi, Cu, Hg, Ti, Ag, Mn, Fe, V, Sn, Zr, Sr, Ga, Si, and Cr; perovskite such as SrTiO₃ and CaTiO₃; or sulfides such as CdS, ZnS, In₂S₃, PbS, Mo₂S, WS₂, Sb₂S₃, Bi₂S₃, ZnCdS₂, and Cu₂S; metal chalcogenide such as CdSe, In₂Se₃, WSe₂, HgSe, PbSe, and CdTe; GaAs; Si; Se; Cd₃P₂; Zn₃P₂; InP; AgBr; Pbl₂; HgI₂; and BiI₃. Alternatively, complexes containing at least one selected from the above semiconductors are preferable, such as CdS/TiO₂, CdS/AgI, Ag₂S/AgI, CdS/ZnO, CdS/HgS, CdS/PbS, ZnO/ZnS, ZnO/ZnSe, CdS/HgS, CdSₓ/CdSe₁₋ₓ, CdSₓ/Te₁₋ₓ, CdSeₓ/Te₁₋ₓ, ZnS/CdSe, ZnSe/CdSe, CdS/ZnS, TiO/Cd₃P₂, CdS/CdSeCd_{y}Zn_{1-y}S, and CdS/HgS/CdS.

The flat semiconductor layer as shown in FIG. 1 can be prepared, for example, by coating the surface of the substrate 3 having the transparent electrode 5 with a slurry liquid made of conductive fine particles by a known ordinary method (e.g., a coating method using a doctor blade, a bar coater or the like, a spray method, a dip coating method, screen printing, spin coating, etc.), and thereafter, sintering the substrate 3 by heating at a temperature in a range of 400°C to 600°C. Furthermore, the thickness of the semiconductor layer can be set to be a desired value by repeating the above-mentioned coating and heating/sintering.

Furthermore, by controlling the thickness of the porous semiconductor layer, a roughness factor (ratio of a real area of a porous inner portion with respect to a substrate area) can be determined. The roughness factor is preferably 20 or more, and most preferably 150 or more. In the case where the roughness factor is less than 20, the supported amount of a sensitizing dye becomes insufficient, making it difficult to improve photoelectric conversion characteristics. The upper limit of the roughness factor generally is about 5000. When the thickness of the semiconductor layer is made larger, the roughness factor is increased and the surface area of the semiconductor layer is enlarged, whereby an increase in supported amount of a sensitizing dye can be expected. However, when the thickness becomes too large, the influence of a light transmittance and a resistance loss of the semiconductor layer starts being exhibited. Furthermore, when the porosity of the film is increased, the roughness factor can be increased even without making the film thickness larger. However, when the porosity is too high, the contact area between the conductive particles is decreased, which makes it necessary to consider the influence of a resistance loss. In view of the above, the porosity of the film preferably is 50% or more, and its upper limit generally is about 80%. The porosity of the film can be calculated from a measurement result of an adsorption-elimination isothermal line of nitrogen gas or krypton gas at a liquid nitrogen temperature.

By allowing the semiconductor layer 7 of the present invention to support sensitizing dye molecules, a photoelectric transducer having a high photoelectric conversion efficiency can be obtained. As the sensitizing dye to be supported on the semiconductor layer 7 of the present invention, any of dyes typically used in conventional dye sensitization photoelectric transducers can be used. Examples of the dye include a Rulri(Hz0)z type ruthenium-cis-diaqua-bipyridyl complex; transition metal complexes of types such as ruthenium-tris(RuL₃), Ruthenium-bis(RuL₂), osnium-tris(OsL₃), and osnium-bis(OsL₂) (where L represents 4,4'-dicarboxyl-2,2'-bipyridine); zinc-tetra(4-carboxyphenyl) porphyrin; iron-hexacyanide complex; phthalocyanine; and the like. Examples of the organic dye include a 9-phenylxanthene dye, a coumalin dye, an acridine dye, a triphenylmethane dye, a tetraphenylmethane dye, a quinone dye, an azo dye, an indigo dye, a cyanine dye, a merocyanine dye, a xanthene dye, and the like. Among them, a ruthenium-his (RuL₂) derivative is preferable.

The supported amount of the sensitizing dye 19 on the semiconductor layer 7 may be in a range of 1 × 10⁻⁸ mol/cm² to 1 × 10⁻⁶ mol/cm², and in particular, preferably in a range of 0.1 × 10⁻⁷ mol/cm² to 9.0 × 10⁻⁷ mol/cm². In the case where the supported amount of the sensitizing dye 19 is less than 1 × 10⁻⁸ mol/cm², a photoelectric conversion efficiency enhancement effect becomes insufficient. On the other hand, in the case where the supported amount of the sensitizing dye exceeds 1 × 10⁻⁶ mol/cm², a photoelectric conversion efficiency enhancement effect is saturated, which is not economical.

An example of a method for allowing the semiconductor layer 7 to support a sensitizing dye includes soaking the substrate 3 with the semiconductor layer 7 formed thereon in a solution in which a sensitizing dye is dissolved. As the solvent for this solution, any solvent can be used as long as it can dissolve a sensitizing dye, such as water, alcohol, toluene, dimethylformamide, and the like. Furthermore, as a soaking method, it is effective to perform reflux by heating and apply an ultrasonic wave while a substrate having electrodes with the semiconductor layer 7 formed thereon is soaked in a sensitizing dye solution for a predetermined period or time.

The counter electrode 9 functions as a positive electrode of the photoelectric transducer 1 in the same way as in the electrode 5 on the side where the semiconductor layer 7 is formed. As the material for the counter electrode 9 of the photoelectric transducer 1 of the present invention, platinum, graphite, and the like having a catalytic function of giving electrons to a reductant of the electrolyte, so as to function efficiently as a positive electrode of the photoelectric transducer 1, are preferable. Furthermore, a conductive film made of a material different from that for the counter electrode 9 may be provided between the counter electrode 9 and the substrate 11.

The electrolyte layer 13 is interposed between the semiconductor layer 7 supporting the sensitizing dye 19 and the counter electrode 9. The kind of the electrolyte is not particularly limited, as long as a pair of oxidation-reduction type constituents composed of an oxidant and a reductant are included in a solvent. An oxidation-reduction type constituent, in which an oxidant and a reductant have the same charge, is preferable. The oxidation-reduction type constituents in the present invention refer to a pair of materials that are present in the form of an oxidant and a reductant reversibly in an oxidation-reduction reaction.

The oxidation-reduction type constituents are iodine compound-iodine. In particular, the invention provides added iodine and quaternary ammonium iodide such as tetraalkylammonium iodide, pyridinium iodide, and the like; and imidazolium iodide such as dimethylpropylimidazolium iodide.

The concentration of the dye to be included in the electrolytic solution is varied depending upon the kind and combination of a semiconductor, a dye, and a solvent of an electrolytic solution. The concentration preferably is in a range of 1 × 10⁻⁹ mol/dm³ to 1 × 10⁻² mol/dm³. When the concentration of the dye in the electrolytic solution is less than 1 × 10⁻⁹ mol/dm³, the dye adsorbed by the surface of the semiconductor is eliminated, and characteristics are likely to be degraded. Furthermore, when the concentration of the dye exceeds 1 × 10⁻² mol/dm³, the amount of the dye that absorbs light in the electrolytic solution but cannot contribute to photoelectric conversion is increased such that characteristics are degraded.

Furthermore, according to the present invention, as the polymer compound used as a matrix in the electrolyte layer, various compounds are used. Examples thereof include vinylidene fluoride type polymer such as polyvinylidene fluoride; an acrylic polymer such as polyacrylic acid; acrylonitrile polymer such as polyacrylonitrile; and a polyether polymer such as polyethylene oxide. A vinylidene fluoride polymer is used preferably. Examples of the vinylindene fluoride polymer include a single polymer of vinylidene fluoride or a combination of a vinylindene fluoride and another polymerizable monomer (in particular, a copolymer with a radical polymerizable monomer). Examples of another polymerizable monomer (hereinafter, referred to as a "copolymerizable monomer") to be copolymerized with vinylidene fluoride include hexafluoropropylene, tetrafluoroethylene, trifluoroethylene, ethylene, propylene, acrylonitrile, vinyldene chloride, methyl acrylate, ethyl acrylate, methyl methacrylate, styrene, and the like.

The above-mentioned copolymerizable monomers can be used in an amount of 1 mol% to 50 mol%, preferably 1 mol% to 25 mol% with respect to the total amount of monomers. As the copolymerizable monomer, hexafluoropropylene is used preferably. In the present invention, a vinylidene fluoride-hexafluoropropylene copolymer, in which 1 mol% to 25 mol% of hexafluoropropylene is copolymerized with vinylidene fluoride, is used preferably. Furthermore, two or more kinds of vinylidene fluoride-hexafluoropropylene copolymers having different copolymerization ratios may be mixed.

Furthermore, two or more kinds of copolymerizable monomers may be copolymerized with vinylidene fluoride. For example, copolymers can be used, which are obtained by copolymerizing vinylidene fluoride, hexafluoropropylene and tetrafluoroethylene, vinylidene fluoride, tetrafluoroethylene and ethylene, vinylidene fluoride, tetrafluoroethylene and propylene, and the like.

Furthermore, a plurality of polymer compounds may be mixed to form a matrix. In the case of mixing a vinylidene fluoride polymer with another polymer compound, another compound generally can be mixed in an amount of 200 parts by weight with respect to 100 parts by weight of vinylidene fluoride polymer.

The number-average molecular weight of the vinylidene fluoride polymer used in the present invention is generally in a range of 10,000 to 2,000,000 and preferably in a range of 100,000 to 1,000,000.

Hereinafter, the configuration and effect of the photoelectric transducer of the present invention will be specifically illustrated by way of examples, in which initial degradation is prevented by including a compound containing a nitrogen atom having non-shared electron pairs in a molecule in an electrolyte layer. The present invention is not limited to only the following examples.

### (Example 1)

Titanium oxide powder of high purity with an average primary particle diameter of 20 nm was dispersed in ethyl cellulose to prepare a paste for screen printing. This was designated as a first paste. Next, titanium oxide powder of high purity having an average primary particle diameter of 20 nm and titanium oxide powder of high purity having an average primary particle diameter of 400 nm were dispersed in ethyl cellulose to prepare a paste for screen printing. This was designated as a second paste.

The first paste for screen printing was applied to a conductive glass substrate "F-SnO2" (Trade Name, 10 Ω/square) produced by Asahi Glass Co., Ltd., having a thickness of 1 mm and dried. The dried substrate thus obtained was sintered in the air at 500°C for 30 minutes to form a porous titanium oxide film with a thickness of 10 µm on the substrate. Next, the second paste was applied to the porous titanium oxide film and dried. Then, the dried substrate thus obtained was sintered in the air at 500°C for 30 minutes to form a titanium oxide film having a thickness of 4 µm on the porous titanium oxide film having a thickness of 10 µm. Next, the resultant substrate was soaked in a sensitizing dye solution represented by [Ru(4,4'-dicarboxyl-2,2'-bipyridine)₂-NCS)₂], and allowed to stand overnight at room temperature (20°C).

The above-mentioned dye solution was obtained by including the above-mentioned sensitizing dye in a mixed solution of acetonitrile and t-butanol (volume ratio 50 : 50) in a concentration of 3 × 10⁻⁴ mol/dm³. The dye was supported by soaking an electrode with a TiO₂ film in a dye solution at room temperature (20°C) for 24 hours. A counter electrode was obtained by applying 5 m mol/dm³ of H₂PtCl₆ solution (solvent: isopropyl alcohol) to the conductive glass substrate "F-SnO₂" with sputtered Pt having a thickness of 20 nm thereon in a ratio of 5 to 10 mm³/cm², followed by heat treatment at 450°C for 15 minutes. For attaching the electrode with the TiO₂ film formed thereon, supporting the dye, to the counter electrode, a hot-melt sheet "bynel" (Trade Name) having a thickness of 35 µm produced by Dupont was used. Heating was conducted at 150°C for 30 seconds. An electrolytic solution was injected through an injection port with a diameter of 1 mm provided at the counter electrode by a reduced-pressure injection method, and the injection port was sealed by fixing a cover glass having a thickness of 500 µm with the above-mentioned "bynel". Furthermore, an epoxy adhesive "Torr Seal" (Trade Name) produced by ANELVA Corporation was applied to the peripheral portion of the cell to enhance sealing strength.

The electrolytic solution was obtained by dissolving 0.5 mol/dm³ of iodine and 0.45 mol/dm³ of N-methyl benzoimidazole in a mixed solvent composed of 99% by weight of 1-methyl-3-propylimidazolium iodide and 1% by weight of water.

### (Example 2)

An electrolytic solution was obtained by dissolving 0.6 mol/dm³ of dimethylpropylimidazolium iodide, 0.1 mol/dm³ of iodine, and 0.5 mol/dm³ of N-methylbenzoimidazole in 3-methoxypropionitrile. A photoelectric transducer was produced in the same way as in Example 1, except that an electrolyte layer having the above composition was used.

### (Example 3)

An electrolytic solution was obtained by dissolving 5 × 10⁻⁵ mol/dm³ of N-methylbenzoimidazole and 0.5 mol/dm³ of iodine in a mixed solvent composed of 99% by weight of 1-methyl-3-propylimidazolium iodide and 1% by weight of water. A photoelectric transducer was produced in the same way as in Example 1, except that an electrolyte layer having the above composition was used.

### (Example 4)

An electrolytic solution was obtained by dissolving 0.6 mol/dm³ of dimethylpropylimidazolium iodide, 5 × 10⁻⁵ mol/dm³ of N-methylbenzoimidazole, and 0.1 mol/dm³ of iodine in polyethylene glycol (number-average molecular weight NW: 200). A photoelectric transducer was produced in the same way as in Example 1, except that an electrolyte layer having the above composition was used.

### (Example 5)

An electrolytic solution was obtained by dissolving 0.6 mol/dm³ of 1,2-dimethyl-3-propylimidazolium iodide, 0.1 mol/dm³ of iodine, and 0.5 mol/dm³ of N-methylbenzoimidazole in 3-methoxypropionitrile, and adding 5% by weight of poly(vinylidene fluoride-hexafluoropropylene) "KYNAR2801" (Trade Name) produced by ATOFINA Japan to the mixture. A photoelectric transducer was produced in the same way as in Example 1, except that an electrolyte layer having the above composition was used.

### (Comparative Example 1)

An electrolytic solution was obtained by dissolving 0.5 mol/dm³ of iodine in a mixed solvent composed of 99% by weight of 1-methyl-3-propylimidazolium iodide and 1% by weight of water. A photoelectric transducer was produced in the same way as in Example 1, except that an electrolyte layer having the above composition was used.

### (Comparative Example 2)

An electrolytic solution was obtained by dissolving 0.45 mol/dm³ of N-methylbenzoimidazole and 0.05 mol/dm³ of iodine in a mixed solvent composed of 99% by weight of 1-methyl-3 propylimidazolium iodide and 1% by weight of water. A photoelectric transducer was produced in the same way as in Example 1, except that an electrolyte layer having the above composition was used.

### (Comparative Example 3)

An electrolytic solution was obtained by dissolving 0.45 mol/dm³ of N-methylbenzoimidazole and 6.5 mol/dm³ of iodine in a mixed solvent composed of 99% by weight of 1-methyl-3-propylimidazolium iodide and 1% by weight of water. A photoelectric transducer was produced in the same way as in Example 1, except that an electrolyte layer having the above composition was used.

### (Comparative Example 4)

An electrolytic solution was obtained by dissolving 0.6 mol/dm³ of dimethylpropyl imidazolium iodide and 0.1 mol/dm³ of iodine in 3-methoxypropionitrile. A photoelectric transducer was produced in the same way as in Example 1, except that an electrolyte layer having the above composition was used.

Regarding the photoelectric transducers in Examples 1 to 5 and Comparative Examples 1 to 4, an initial conversion efficiency was obtained under pseudo sunlight having an intensity of 100 mW/cm². Table 1 shows the results. In Table 1, "O" represents a conversion efficiency of 5% or more, and "X" represents a conversion efficiency of less than 5%. Furthermore, the conversion efficiency after storage at 80°C for 1000 hours was obtained and compared with that before storage. Table 1 shows the results. In Table 1, "A" represents a decrease ratio of less than 10%, "B" represents a decrease ratio of 10 to 50%, and "C" represents a decrease ratio of more than 50%. The conversion efficiency after storage also was measured under pseudo sunlight having an intensity of 100 mW/cm².

In Table 1, an added compound containing a nitrogen atom having non-shared electron pairs in a molecule is represented as "compound A".

**Table 1**

| | Solvent of electrolyte | Compound A and concentration (mol/dm³) | Concentration of iodine (mol/dm³) | Initial conversion efficiency | Decrease ratio of conversion efficiency |
|---|---|---|---|---|---|
| Example 1 | 1-methyl-3-propylimidazolium iodide | N-methylbenzoimidazole: 0.45 | 0.6 | ○ | A |
| Example 2 | 3-methoxypropionitrile | N-methylbenzoimidazole: 0.5 | 0.1 | ○ | A |
| Example 3 | 1-methyl-3-propylimidazolium iodide | N-methylbenzoimidazole: 5 × 10⁻⁶ | 0.5 | ○ | B |
| Example 4 | Polyethylene glycol (MW: 200) | N-methylbenzoimidazole: 5 × 10⁻⁶ | 0.1 | ○ | B |
| Example 5 | 3-methoxypropionitrile | N-methylbenzoimidazole: 0.5 | 0.1 | ○ | A |
| Comparative Example 1 | 1-methyl-3-propylimidazolium iodide | None | 0.5 | ○ | C |
| Comparative Example 2 | 1-methyl-3-propylimidazolium iodide | N-methylbenzoimidazole: 0.45 | 0.05 | ○ | C |
| Comparative Example 3 | 1-methyl-3-propylimidozolium iodide | N-methylbenzoimidazole: 0.45 | 6.6 | × | A |
| Comparative Example 4 | 3-methoxypropionitrile | None | 0.1 | ○ | C |

As shown in Table 1, when Examples 1 to 5 using a compound containing a nitrogen atom having non-shared electron pairs in a molecule and iodine having a concentration of 0.06 mol/dm³ to 6 mol/dm³ in an electrolyte layer are compared with Comparative Example 3 in which the concentration of iodine is more than 6 mol/dm³, it was confirmed that the initial conversion efficiency was higher in Examples 1 to 5 than in Comparative Example 3.

Furthermore, when Examples 1 to 5 using a compound containing a nitrogen atom having non-shared electron pairs in a molecule in an electrolyte layer are compared with Comparative Examples 1 and 4 using no compound containing a nitrogen atom having non-shared electron pairs in a molecule, the decrease ratio of the conversion efficiency was smaller in Examples 1 to 5 than in Comparative Examples 1 and 4. Thus, in Examples 1 to 5, the conversion efficiency was maintained for a long period of time.

Furthermore, in Example 1 using a compound containing a nitrogen atom having non-shared electron pairs in a molecule in an amount of 5 × 10⁻⁴ mol/dm³ to 2 mol/dm³, the conversion efficiency was maintained for a longer period of time, compared with Example 3 in which the content of the compound was smaller.

Furthermore, in Examples 1 using 1-methyl-3-propylimidazolium iodide as a solvent and Example 2 using 3-methoxypropylnitrile as a solvent, the conversion efficiency was maintained for a longer period of time, compared with Example 4 using polyethylene glycol as a solvent.

Furthermore, an electrolytic solution leakage test was performed with respect to the photoelectric transducers in Examples 1 and 5. The test was performed by producing a photoelectric transducer, forming a hole having a diameter of 1 mm connecting an electrolyte layer to an outside with a drill, and visually checking the leakage of the electrolytic solution through this hole. In Example 1 containing no matrix of a polymer compound in the electrolyte layer, leakage was confirmed; however, in Example 5 in which a matrix of a vinylidene fluoride polymer was formed in an electrolyte layer, leakage was not confirmed.

### Industrial Applicability

As described above, according to the present invention, a photoelectric transducer maintaining a high conversion efficiency for a long period of time can be provided.

## Claims

1. A photoelectric transducer comprising: a semiconductor electrode provided with a semiconductor layer supporting a sensitizing dye; a counter electrode opposed to the semiconductor electrode; and an electrolyte layer interposed between the semiconductor electrode and the counter electrode,
wherein the electrolyte layer includes a compound of formula (I): 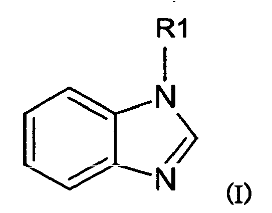 wherein R1 is a linear or branched alkyl, which has 1 to 20 carbon atoms and which may comprise another element that substitutes for a part or an entire of hydrogen;
wherein said electrolyte layer comprises one selected from a room temperature molten salt and a nitrile solvent having a boiling point of 100°C or higher; and,
wherein said electrolyte layer comprises iodine added at a concentration of 0.06 mol/dm³ to 6 mol/dm³and triiodide (I₃-), said triiodide being provided by said added iodine and by added iodide salt of a quaternary ammonium compound.

2. The photoelectric transducer according to claim 1, wherein a concentration of said compound of formula (I) in the electrolyte layer is in a range of 5 × 10⁻⁴ mol/dm³ to 2 mol/dm³.

3. The photoelectric transducer according to claim 1, wherein the room temperature molten salt is 1-methyl-3-propylimidazohum iodide.

4. The photoelectric transducer according to claim 1, wherein the nitrile solvent is 3-methoxypropionitrile.

5. The photoelectric transducer according to claim 1,wherein the electrolyte layer further includes a polymer compound forming a matrix.

6. The photoelectric transducer according to claim 5, wherein the polymer compound is a vinylidene fluoride polymer.

7. The photoelectric transducer of claim 1, wherein said compound of formula (I) is N-methylbenzimidazole.

8. The photoelectric transducer of claim 1, wherein said quaternary ammonium compound is an imidazoilium compound.

9. The photoelectric transducer of claim 1, wherein said electrolyte is free of nitrile solvent.

10. The photoelectric transducer according to claim 1, which, after exposure to 80°C for 1000 hours, maintains at least 90% of its initial power conversion efficiency.

11. The photoelectric transducer according to claim 10, wherein the maintained power conversion efficiency after exposure is > 4.5%, measured in simulated sunlight having an intensity of 100 mW/cm².

12. A method of manufacturing a stable photoelectric transducer, wherein stable means that, after exposure to 80°C for 1000 hours, said transducer maintains at least 90% of its initial power conversion efficiency, said method comprising the steps of
- providing a semiconductor electrode provided with a semiconductor layer supporting a sensitizing dye;
- providing a counter electrode opposed to the semiconductor electrode; and,
- providing an electrolyte layer interposed between the semiconductor electrode and the counter electrode, wherein said electrolyte layer includes a compound of formula (I): 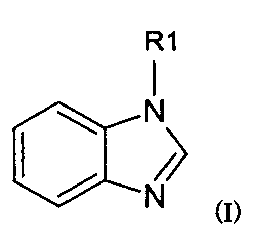
wherein R1 is an alkyl, wherein said alkyl includes 1 to 20 carbon atoms and may be linear or branched and may comprise another element that substitutes for a part or an entire of hydrogen;
wherein said electrolyte layer comprises one selected from a room temperature molten salt and a nitrile solvent having a boiling point of 100°C or higher; and,
wherein said electrolyte layer comprises iodine added at a concentration of 0.06 mol/dm³ to 6 mol/dm³, and triiodide (I₃⁻), said triiodide being provided by said added iodine and by added iodide salt of a quaternary ammonium compound.

13. The method of claim 12, wherein the maintained power conversion efficiency after exposure is > 4.5%, measured in simulated sunlight having an intensity of 100 mW/cm².

14. The method of claim 12, wherein said quaternary ammonium compound is an imidazolium compound.

## Patentansprüche

1. Ein photoelektrischer Wandler mit folgenden Teilen: Einer Halbleiterelektrode mit einer Halbleiterschicht, die einen sensibilisierenden Farbstoff trägt; Einer Gegenelektrode im Gegensatz zur Halbleiterelektrode; Und einer Elektrolytschicht zwischen der Halbleiterelektrode und der Gegenelektrode,
**dadurch gekennzeichnet, daß** die Elekrolytschicht eine Verbindung der Formel (I) einschließt; 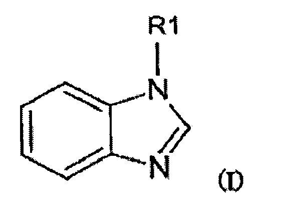 in der R1 ein lineares oder verzweigtes Alkyl ist, das 1 bis 20 Kohlenstoffatome enthält, und ein weiteres Element umfassen kann, das Wasserstoff teilweise oder vollständig substituiert;
**dadurch gekennzeichnet, daß** die besagte Elektrolytschicht eine unter einem bei Raumtemperatur geschmolzenen Salz und einem Nitrillösemittel mit einem Siedepunkt bei 100°C oder höher gewählte Komponente umfaßt; und
**dadurch gekennzeichnet, daß** die besagte Elektrolytschicht Jod umfaßt, das in einer Konzentration von 0,06 Mol/dm³ bis 6 Mol/dm³ zugesetzt wurde, und Trijodid (I₃-), wobei das besagte Trijodid vom besagten zugesetzten Jod und von zugesetztem Jodidsalz einer quartären Ammoniumverbindung gestellt wird.

2. Der photoelektrische Wandler nach Anspruch 1, **dadurch gekennzeichnet, daß** eine Konzentration der besagten Verbindung der Formel (I) in der Elektrolytschicht im Bereich von 5 x 10⁻⁴ Mol/dm³ bis 2 Mol/dm³ liegt.

3. Der photoelektrische Wandler nach Anspruch 1, **dadurch gekennzeichnet, daß** das bei Raumtemperatur geschmolzene Salz 1-Methyl-3-Propylimidazoliumjodid ist.

4. Der photoelektrische Wandler nach Anspruch 1,
**dadurch gekennzeichnet, daß** das Nitrillösemittel 3-Methoxyproprionitril ist.

5. Der photoelektrische Wandler nach Anspruch 1, **dadurch gekennzeichnet, daß** die Elektrolytschicht ferner eine Polymerverbindung einschließt, die eine Matrix bildet.

6. Der photoelektrische Wandler nach Anspruch 5, **dadurch gekennzeichnet, daß** die Polymerverbindung ein Vinylidenfluoridpolymer ist.

7. Der photoelektrische Wandler nach Anspruch 1, **dadurch gekennzeichnet, daß** die besagte Verbindung der Formel (I) N-Methylbenzimidazol ist.

8. Der photoelektrische Wandler nach Anspruch 1, **dadurch gekennzeichnet, daß** die besagte quartäre Ammoniumvervindung eine Imidazoliumverbindung ist.

9. Der photoelektrische Wandler nach Anspruch 1, **dadurch gekennzeichnet, daß** der besagte Elektrolyt frei von Nitrillösemittel ist.

10. Der photoelektrische Wandler nach Anspruch 1, **dadurch gekennzeichnet, daß** sie nach einer Einwirkung von 80°C über 1.000 Stunden mindestens 90% ihrer ursprünglichen Kraftwandeleffizienz beibehält.

11. Der photoelektrische Wandler nach Anspruch 10, **dadurch gekennzeichnet, daß** die erhaltene Kraftwandeleffizienz nach der Einwirkung > 4,5% beträgt, gemessen an simuliertem Sonnenlicht mit einer Stärke von 100 mW/cm².

12. Eine Methode zur Herstellung eines stabilen photoelektrischen Wandlers, wobei stabil bedeutet, daß der besagte Wandler nach Einwirkung von 80°C über 1.000 Stunden mindestens 90% ihrer ursprünglichen Kraftwandeleffizienz beibehält, wobei die besagte Methode die folgenden Schritte umfaßt:
- Eine Halbleiterelektrode mit einer Halbleiterschicht stellen, die einen sensibilisierenden Farbstoff trägt;
- Eine Gegenelektrode im Gegensatz zur Halbleiterelektrode stellen; und
- Eine Elektrolytschicht zwischen der Halbleiterelektrode und der Gegenelektrode stellen, **dadurch gekennzeichnet, daß** die besagte Elektrolytschicht eine Verbindung der Formel (I) einschließt: 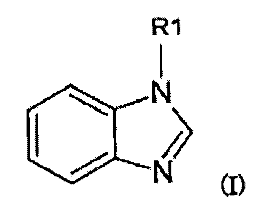 in der R1 ein Alkyl ist, das 1 bis 20 Kohlenstoffatome enthält und linear oder verzweigt sein kann und ein weiteres Element umfassen kann, das anstelle eines Teils oder eines Ganzen von Wasserstoff tritt;
**dadurch gekennzeichnet, daß** die besagte Elektrolytschicht eine unter einem bei Raumtemperatur geschmolzenen Salz und einem Nitrillösemittel mit einem Siedepunkt bei 100°C oder höher gewählte Komponente umfaßt;
**dadurch gekennzeichnet, daß** die besagte Elektrolytschicht Jod umfaßt, das in einer Konzentration von 0,06 Mol/dm³ bis 6 Mol/dm³ zugesetzt wurde, und Trijodid (I₃-), wobei das besagte Trijodid vom besagten zugesetzten Jod und vom zugesetzten Jodidsalz einer quartären Ammoniumverbindung gestellt wird.

13. Die Methode nach Anspruch 12, **dadurch gekennzeichnet, daß** die erhaltene Kraftwandeleffizienz nach der Einwirkung > 4,5% beträgt, gemessen an simuliertem Sonnenlicht mit einer Stärke von 100 mW/cm².

14. Die Methode nach Anspruch 13, **dadurch gekennzeichnet, daß** die quartäre Ammoniumverbindung eine Imidazoliumverbindung ist.

## Revendications

1. Transducteur photoélectrique comprenant : une électrode semi-conductrice dotée d'une couche semi-conductrice supportant un colorant sensibilisateur ; une contre-électrode opposée à l'électrode semi-conductrice ; et une couche d'électrolyte intercalée entre l'électrode semi-conductrice et la contre-électrode,
dans lequel la couche d'électrolyte inclut un composé de formule (I): 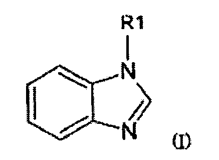 dans laquelle R1 est un alkyle linéaire ou ramifié, qui a de 1 à 20 atomes de carbone et qui peut comprendre un autre élément qui remplace tout ou partie de l'hydrogène ;
dans laquelle ladite couche d'électrolyte comprend un élément choisi parmi un sel fondu à température ambiante et un solvant nitrile ayant un point d'ébullition de 100 °C ou plus ; et,
dans laquelle ladite couche d'électrolyte comprend de l'iode ajouté à une concentration de 0,06 mole/dm³ à 6 moles/dm³, et un triiodure (I₃⁻), ledit triiodure étant fourni par ledit iode ajouté et par un sel d'iodure d'un composé d'ammonium quaternaire ajouté.

2. Transducteur photoélectrique selon la revendication 1, dans lequel une concentration dudit composé de la formule (I) dans la couche d'électrolyte est dans la plage de 5 x 10⁻⁴ mole/dm³ à 2 moles/dm³.

3. Transducteur photoélectrique selon la revendication 1, dans lequel le sel fondu à température ambiante est de l'iodure de 1-méthyl-3-propylimidazolium.

4. Transducteur photoélectrique selon la revendication 1, dans lequel le solvant nitrile est le 3-méthoxypropionitrile.

5. Transducteur photoélectrique selon la revendication 1, dans lequel la couche d'électrolyte inclut, en outre, un composé de polymère formant une matrice.

6. Transducteur photoélectrique selon la revendication 5, dans lequel le composé de polymère est un polymère de fluorure de vinylidène.

7. Transducteur photoélectrique selon la revendication 1, dans lequel ledit composé de la formule (I) est le N-méthylbenzimidazole.

8. Transducteur photoélectrique selon la revendication 1, dans lequel ledit composé d'ammonium quaternaire est un composé d'imidazolium.

9. Transducteur photoélectrique selon la revendication 1, dans lequel ledit électrolyte est exempt de solvant nitrile.

10. Transducteur photoélectrique selon la revendication 1 qui, suite à une exposition à 80 °C pendant 1 000 heures, maintient au moins 90 % de son efficacité de conversion de puissance initiale.

11. Transducteur photoélectrique selon la revendication 10, dans lequel l'efficacité de conversion de puissance maintenue suite à l'exposition est supérieure à 4,5 %, mesurée à la lumière du soleil simulée ayant une intensité de 100 mW/cm².

12. Procédé de fabrication d'un transducteur photoélectrique stable, dans lequel stable signifie que, après une exposition à 80 °C pendant 1 000 heures, ledit transducteur maintient au moins 90 % de son efficacité de conversion de puissance initiale, ledit procédé comprenant les étapes de :
- fourniture d'une électrode semi-conductrice dotée d'une couche semi-conductrice supportant un colorant sensibilisateur ;
- fourniture d'une contre-électrode opposée à l'électrode semi-conductrice ; et,
- fourniture d'une couche d'électrolyte intercalée entre l'électrode semi-conductrice et la contre-électrode, ladite couche d'électrolyte incluant un composé de la formule (I) : 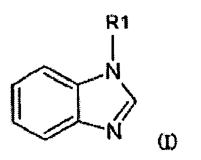
dans laquelle R1 est un alkyle, dans lequel ledit alkyle inclut de 1 à 20 atomes de carbone et peut être linéaire ou ramifié, et peut comprendre un autre élément qui remplace tout ou partie de l'hydrogène ;
dans laquelle ladite couche d'électrolyte comprend un élément choisi parmi un sel fondu à température ambiante et un solvant nitrile ayant un point d'ébullition de 100 °C ou plus ; et,
dans laquelle ladite couche d'électrolyte comprend de l'iode ajouté à une concentration de 0,06 mole/dm³ à 6 moles/dm³, et le triiodure (I₃⁻), dudit triiodure étant fourni par ledit iode ajouté et par un sel d'iodure d'un composé d'ammonium quaternaire ajouté.

13. Procédé selon la revendication 12, dans lequel l'efficacité de conversion de puissance maintenue après exposition est supérieure à 4,5 %, mesurée à la lumière du soleil simulée ayant une intensité de 100 mW/cm².

14. Procédé selon la revendication 13, dans lequel le composé d'ammonium quaternaire est un composé d'imidazolium.
